(19) Europäisches Patentamt
European Patent Office
Office européen des brevets

(11) **EP 1 279 549 A1**

(12) **DEMANDE DE BREVET EUROPEEN**

(43) Date de publication:
    **29.01.2003 Bulletin 2003/05**

(51) Int Cl.⁷: **B60K 41/22**, F16H 3/12, F16H 61/04, B60K 41/10

(21) Numéro de dépôt: 02291852.8

(22) Date de dépôt: **22.07.2002**

(84) Etats contractants désignés:
    **AT BE BG CH CY CZ DE DK EE ES FI FR GB GR IE IT LI LU MC NL PT SE SK TR**
    Etats d'extension désignés:
    **AL LT LV MK RO SI**

(30) Priorité: **23.07.2001 FR 0109787**

(71) Demandeur: **Renault s.a.s.**
    **92100 Boulogne Billancourt (FR)**

(72) Inventeurs:
• **Fournier, Vincent**
  **92300 Levallois-Perret (FR)**
• **Picard, Marc**
  **92500 Reuil Malmaison (FR)**
• **Kakona, Asseté**
  **78390 Bois d'Arcy (FR)**

(54) **Procédé de commande d'un groupe motopropulseur**

(57)     L'invention propose un procédé de commande d'un groupe motopropulseur comportant un arbre primaire accouplé à un moteur par l'intermédiaire d'un embrayage principal et entraînant un arbre secondaire, et comportant un embrayage de dérivation de couple interposé entre l'arbre de sortie du moteur et l'arbre secondaire, du type qui comporte au moins une étape de passage d'un rapport ($R_K$) courant à un autre rapport ($R_{K+1}$) supérieur qui comporte au moins une quatrième sous-étape (SE4) au cours de laquelle l'unité de pilotage commande synchronisation de l'arbre de sortie du moteur avec une vitesse ($V_{SYNC}$) de synchronisation du rapport ($R_{K+1}$) à établir, caractérisé en ce que, au cours de la quatrième sous-étape (SE4), l'unité de pilotage peut commander sélectivement une opération (OFP20) de fermeture partielle puis d'ouverture de l'embrayage principal pour accélérer la synchronisation de l'arbre primaire afin de soulager les synchroniseurs.

Fig. 3

EP 1 279 549 A1

## Description

L'invention concerne un procédé de commande d'un groupe motopropulseur de véhicule automobile.

L'invention concerne plus particulièrement un procédé de commande d'un groupe motopropulseur qui comprend un moteur thermique associé à une transmission automatisée à synchroniseurs et à dérivation de couple comportant un premier arbre primaire qui est couplé à un arbre de sortie du moteur par l'intermédiaire d'un premier embrayage et à un arbre secondaire par des descentes d'engrenages, et qui comprend un second arbre primaire qui est accouplé directement au moteur et à l'arbre secondaire par un second embrayage, de façon à dériver le couple vers celui-ci sur un rapport particulier de la transmission et pendant certains changements de rapport.

On connaît de nombreux exemples de procédés de commande de ce type.

Le document EP-A2-0.088.486 décrit et représente un groupe motopropulseur comportant un dispositif dont un arbre primaire est accouplé à un moteur par l'intermédiaire d'un embrayage principal et au moins un arbre secondaire pouvant être entraîné par l'arbre primaire selon différents rapports par l'intermédiaire d'autant d'engrenages associés. Le dispositif comporte un arbre de dérivation, qui est monté coaxialement à l'arbre primaire et qui est d'une part accouplé en permanence au moteur et d'autre part relié à un embrayage multidisques qui est lui-même relié à l'arbre secondaire par l'intermédiaire d'une démultiplication. Cet arbre de dérivation permet de dériver le couple moteur vers l'arbre secondaire suivant un rapport de démultiplication déterminé, supérieur à tous les rapports de démultiplication des engrenages, pour permettre un changement de rapport sans rupture de couple.

Ainsi, le passage d'un rapport de rang courant à un rapport de rang déterminé supérieur est réalisé en dérivant le couple moteur par l'intermédiaire de l'arbre de dérivation, de l'embrayage multidisques, et de la démultiplication associée. Puis, le pignon fou associé au rapport de rang courant est décraboté, le pignon fou associé au rapport de rang déterminé supérieur est synchronisé conventionnellement puis craboté, le couple moteur cheminant toujours par l'intermédiaire de l'arbre de dérivation, de l'embrayage multidisques, et de la démultiplication associée. Enfin, l'embrayage multidisques est desserré.

L'inconvénient d'une telle conception est que le changement de rapport doit être effectué rapidement avant que l'arbre moteur ne soit parvenu à la vitesse de synchronisation. Cette contrainte nécessite un dimensionnement adéquat du dispositif de synchronisation de l'arbre primaire.

De plus, la synchronisation de l'arbre moteur par le dispositif de dérivation de couple s'effectue en rendant l'embrayage multidisques glissant pendant toute la durée du changement de rapport, et de ce fait, cette conception impose de dimensionner l'embrayage multidisques de manière qu'il soit à même de dissiper beaucoup d'énergie. L'embrayage multidisques est de ce fait particulièrement encombrant.

Pour remédier à cet inconvénient, l'invention propose un procédé de commande d'un groupe motopropulseur permettant, sous certaines conditions, d'accélérer la synchronisation de l'arbre moteur en transmettant temporairement un léger couple dans l'embrayage principal au cours du changement de rapport.

Dans ce but, l'invention propose un procédé de commande d'un groupe motopropulseur permettant que le couple fourni par le moteur puisse être régulé entre le décrabotage du rapport courant et le crabotage du nouveau rapport, pour que la vitesse de rotation de l'arbre de sortie du moteur atteigne rapidement la vitesse de synchronisation moteur sur le nouveau rapport de transmission.

Selon d'autres caractéristiques de l'invention:

- le procédé de commande comporte une opération de fermeture partielle puis d'ouverture de l'embrayage principal, entre le décrabotage du rapport courant et le crabotage du rapport de rang supérieur,

- le procédé comporte une opération de régulation du couple dérivé par l'embrayage de dérivation entre le décrabotage du rapport courant et le crabotage du rapport de rang supérieur,

- les paramètres de fonctionnement du groupe motopropulseur comportent notamment :

  • une information représentative d'une durée estimée pour que la vitesse de rotation de l'arbre de sortie du moteur atteigne la vitesse de synchronisation,

  • une information représentative d'une durée estimée pour passer du rapport courant au rapport de rang supérieur sans que l'unité de pilotage commande la fermeture partielle puis l'ouverture de l'embrayage principal,

  • une information représentative du rapport de transmission courant, et

  • une information représentative du rapport de transmission de rang supérieur,

- l'unité de pilotage du groupe motopropulseur émet une consigne de régulation de couple fourni par le moteur et/ou une consigne de régulation de couple transmis par l'embrayage de dérivation,

- l'opération fermeture partielle puis d'ouverture de l'embrayage principal est engagée si le rapport de rang supérieur est inférieur à un rapport particulier de dérivation de couple, et si la durée estimée de passage est supérieure à une durée estimée de synchronisation du moteur,

- l'unité de pilotage émet une consigne de régulation de couple comportant une consigne de pilotage du couple moteur et une consigne de pilotage du couple transmis par l'embrayage de dérivation qui sont issues chacune d'une fonction de plusieurs variables,

- la consigne de régulation de couple émise par l'unité de pilotage dépend de variables pondérées, le choix des variables et le choix des pondérations associées dépendant notamment des conditions du passage du rapport, du style de conduite et de l'utilisation du véhicule,
- si le rapport de rang supérieur à engager est inférieur au rapport particulier de dérivation de couple, et si la durée estimée de passage est inférieure à la durée estimée de synchronisation du moteur, l'unité commande que le rapport est engagé pendant la phase de synchronisation du moteur, le début de la fermeture de l'embrayage étant simultané à la fin de cette phase de synchronisation du moteur,
- si le rapport de rang supérieur à engager correspond au rapport particulier de dérivation de couple, l'unité commande que la fermeture de l'embrayage de dérivation soit simultanée à l'ouverture de l'embrayage principal,
- l'unité commande que le rapport de rang supérieur soit engagé avant d'ouvrir l'embrayage, l'ouverture de l'embrayage étant simultané à la fermeture de l'embrayage (20) principal.

D'autres caractéristiques et avantages de l'invention apparaîtront à la lecture de la description détaillée qui suit pour la compréhension de laquelle on se reportera aux dessins annexés dans lesquels :

- la figure 1a est une vue schématique d'un groupe motopropulseur piloté par une unité commandée par un procédé conventionnel ;
- la figure 1b est une vue schématique d'un groupe motopropulseur piloté par une unité commandée par le procédé objet de l'invention ;

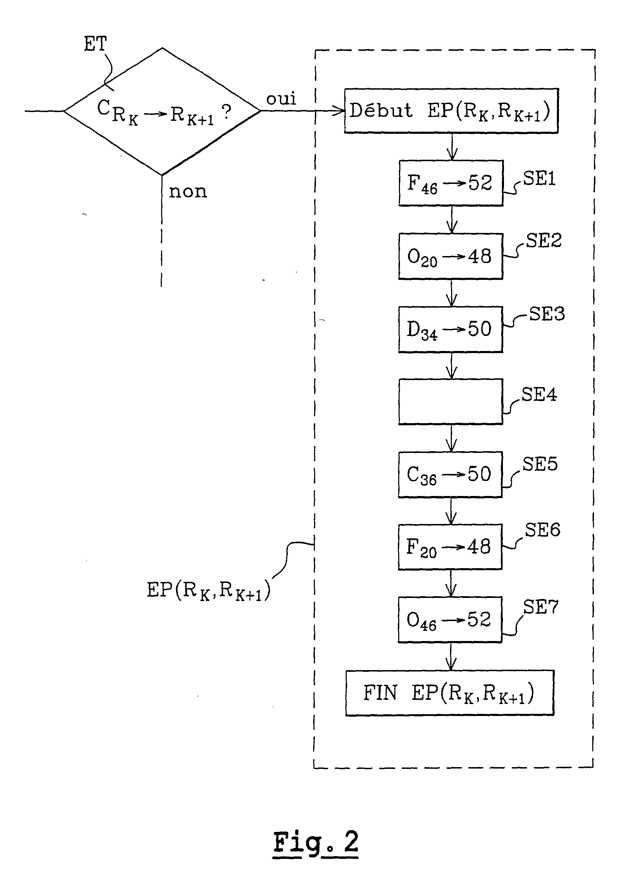

- la figure 2 est un organigramme représentatif d'un procédé conventionnel de commande de l'unité de pilotage de la figure 1 ;
- la figure 3 est un organigramme représentatif du procédé de commande selon l'invention ;

Dans la description qui va suivre, des chiffres de référence identiques désignent des éléments identiques.

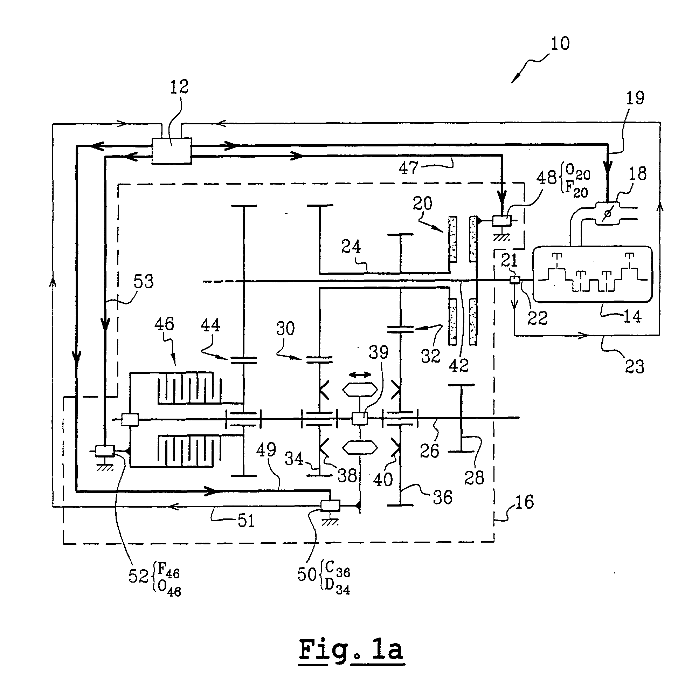

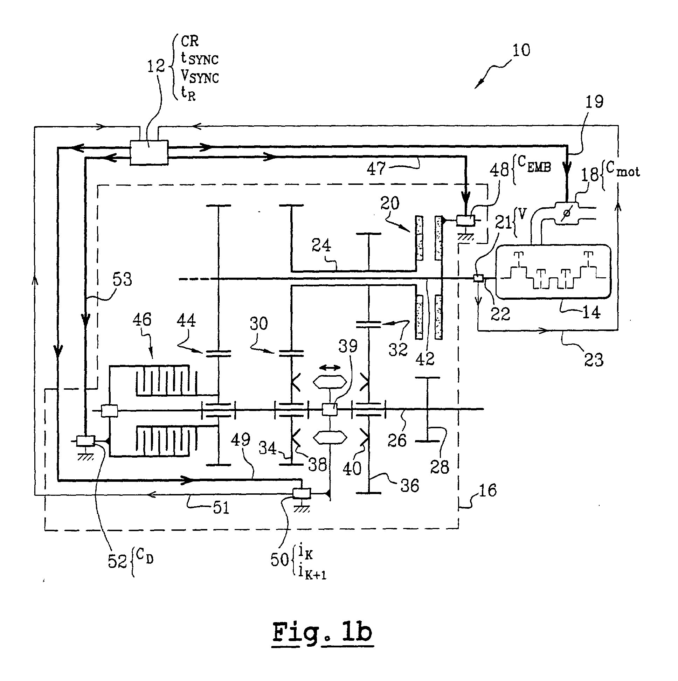

On a représenté à la figure 1 un groupe motopropulseur 10 de véhicule automobile piloté par une unité 12 de pilotage commandée par un procédé conforme à l'invention.

De manière connue, le groupe motopropulseur 10 comporte un moteur 14 accouplé à une boîte de vitesses 16 à actionneurs commandés. La boîte 16 comporte au moins, d'amont en aval, un embrayage 20 principal accouplé à un arbre 22 de sortie du moteur, un arbre primaire 24 et un arbre 26 secondaire parallèles, et un pont 28 destiné à transmettre un couple moteur à au moins une roue (non représentée) du véhicule. La boîte 16 comporte des descentes d'engrenages, en particulier au moins deux engrenages 30 et 32, agencés entre l'arbre primaire 24 et l'arbre secondaire 26, dont chacun comporte au moins un pignon fou 34, 36 qui est susceptible d'être craboté sur l'arbre secondaire 26 qui le porte par l'intermédiaire d'un dispositif de crabotage 39 pour déterminer un rapport "$R_1$", "$R_2$" de transmission associé et qui est associé à un dispositif 38, 40 de synchronisation conventionnel associé. La boîte comporte au moins un dispositif de dérivation de couple qui comporte un arbre 42 primaire supplémentaire qui est accouplé en permanence à l'arbre 22 de sortie du moteur du véhicule et qui est susceptible d'être accouplé à l'arbre secondaire 26 par l'intermédiaire d'un engrenage 44 déterminant un rapport $R_D$ de transmission déterminé et d'un embrayage 46 commandé multidisques.

Le groupe motopropulseur 10 qui a été représenté à la figure 1 comporte, par exemple et de manière non limitative de l'invention, deux pignons fous 34, 36, qui sont susceptible d'être crabotés sur l'arbre secondaire 26 par un dispositif de crabotage 39 commun et qui déterminent des rapports "$R_1$", "$R_2$". Le groupe motopropulseur 10 pourrait comporter un nombre supérieur de pignons fous, qui pourraient aussi être crabotés sur l'arbre primaire 24, et qui détermineraient autant de rapports de transmission.

Le moteur 10 est susceptible d'être commandé en couple, par exemple et de manière non limitative de l'invention, par l'intermédiaire d'un papillon 18 des gaz. L'embrayage principal 20 est susceptible d'être commandé par l'intermédiaire d'un actionneur 48, le dispositif 39 de crabotage est commandé par un actionneur 50, et l'embrayage multidisques 46 est commandé par un actionneur 52. Le papillon 18 des gaz, l'actionneur 48 de l'embrayage principal 20, l'actionneur 50 du dispositif 39 de crabotage, et l'actionneur 52 de l'embrayage multidisques 46 sont pilotés par l'unité 12 de pilotage, et y sont reliés par l'intermédiaire de liaisons de commande respectives 19, 47, 49, et 53.

Cette disposition n'est pas limitative de l'invention et; en variante (non représentée), le papillon 18 pourrait être piloté par une unité de pilotage séparée qui échangerait des informations avec l'unité 12 de pilotage des autres actionneurs.

Par ailleurs, l'unité 12 de pilotage reçoit une information "V" de la vitesse de l'arbre de sortie 22 du moteur 14. Cette information est transmise d'un capteur 21 de vitesse placé sur l'arbre de sortie 22 à l'unité 12 de pilotage par l'intermédiaire d'une liaison 23. L'unité 12 peut aussi recevoir une information de la vitesse de sortie de l'arbre secondaire 26 représentant la vitesse du véhicule.

De manière connue, le procédé objet de l'invention comporte au moins une étape "EP($R_k$, $R_{k+1}$)" de passage d'un rapport "$R_K$" de transmission courant à un autre rapport "$R_{K+1}$" de transmission de rang supérieur qui est initiée par une étape de test "ET" du procédé.

Dans le cadre du groupe motopropulseur 10 qui a été décrit précédemment en référence à la figure 1, et de manière non limitative de l'invention, le rapport "$R_K$" correspondra au rapport "$R_1$" associé à l'engrenage 30 et le rapport "$R_{K+1}$" correspondra au rapport "$R_2$" associé à l'engrenage 32.

Dans la suite de la présente description, seule l'étape "$EP(R_k, R_{k+1})$" et ses sous-étapes seront décrites, les autres étapes du procédé ne faisant pas l'objet de l'invention.

De manière connue, l'étape "$EP(R_k, R_{k+1})$" de passage d'un rapport "$R_K$" de transmission courant à un autre rapport "$R_{K+1}$" de transmission de rang supérieur comporte :

- une première sous-étape "SE1" au cours de laquelle l'unité 12 de pilotage commande le serrage de l'embrayage 46 multidisques, c'est à dire sa fermeture progressive, en émettant une consigne $F_{46}$ à l'intention de l'actionneur 52, pour dériver au moins une partie du couple du moteur 14 à travers le dispositif de dérivation,
- une deuxième sous-étape "SE2" au cours de laquelle l'unité 12 de pilotage commande l'ouverture de l'embrayage 20 principal, en émettant une consigne $O_{26}$ à l'intention de l'actionneur 48,
- une troisième sous-étape "SE3" au cours de laquelle l'unité 12 de pilotage commande le décrabotage du pignon fou 34 correspondant au rapport de transmission courant, en émettant une consigne $D_{34}$ à l'intention de l'actionneur 50,
- une quatrième sous-étape au "SE4" au cours de laquelle l'unité 12 de pilotage commande que la vitesse "V" de rotation de l'arbre 22 de sortie du moteur converge vers une vitesse "$V_{SYNC}$" de synchronisation associée au rapport "$R_{K+1}$" de transmission à établir,
- une cinquième sous-étape "SE5" au cours de laquelle l'unité 12 de pilotage commande le crabotage du pignon fou 36 correspondant au rapport "$R_{K+1}$" de transmission à obtenir, en émettant une consigne $C_{36}$ à l'intention de l'actionneur 52,
- une sixième sous-étape "SE6" au cours de laquelle l'unité 12 de pilotage commande la fermeture de l'embrayage 20 principal, en émettant une consigne $F_{20}$ à l'intention de l'actionneur 48, et
- une septième sous-étape "SE7" au cours de laquelle l'unité 12 de pilotage commande le desserrage de l'embrayage multidisques, c'est à dire son ouverture progressive, en émettant une consigne $O_{46}$ à l'intention de l'actionneur 52.

De manière connue, dans un procédé de commande conventionnel, les sept sous-étapes "SE1", "SE2", "SE3", "SE4", "SE5", "SE6" et "SE7" interviennent les unes après les autres suivant leur ordre numéral.

Par ailleurs, au cours de la quatrième sous-étape "SE4", la synchronisation de l'arbre moteur 22 par le dispositif de dérivation de couple s'effectue au plus en rendant l'embrayage 46 multidisques glissant pendant toute la durée du changement de rapport, et éventuellement en contrôlant le couple du moteur 14 par l'intermédiaire de l'unité 12 ou bien, dans le cas où une unité séparée de pilotage du moteur a été prévue, de ladite unité de pilotage du moteur agissant par exemple sur le papillon 18.

Cette configuration ne permet pas à l'arbre 22 de sortie du moteur thermique 14 d'atteindre rapidement la vitesse "$V_{SYNC}$" "$V_{SYNC}$" de synchronisation.

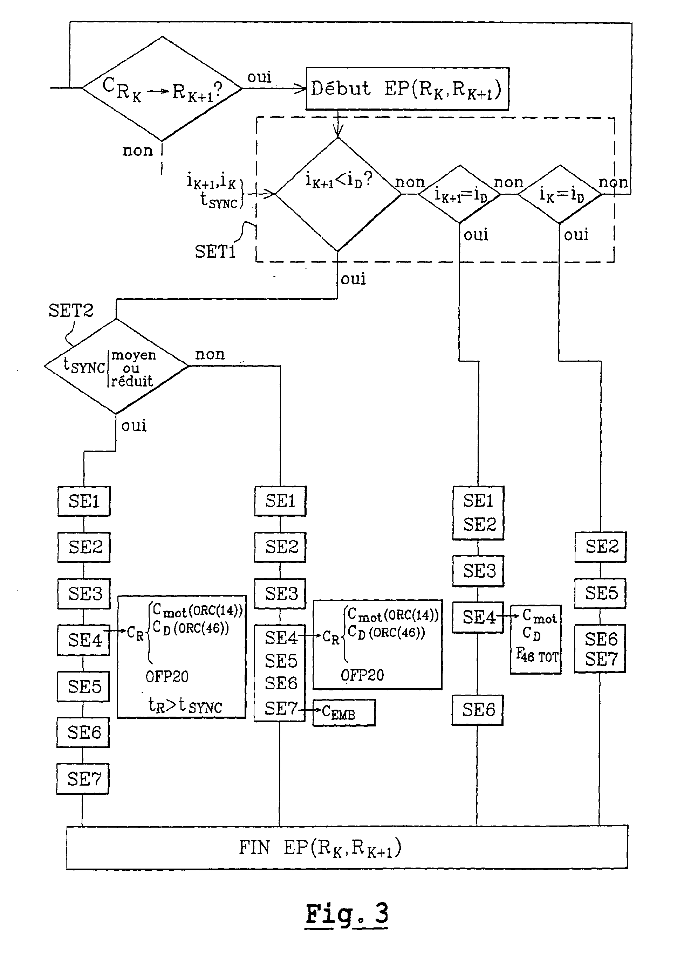

Pour remédier à cet inconvénient, comme l'illustrent les figures 3 et suivantes, l'invention propose un procédé du type décrit précédemment, caractérisé en ce que, au cours de la quatrième sous-étape "SE4", l'unité 12 de pilotage est susceptible, en fonction de paramètres de fonctionnement du groupe motopropulseur 10, de commander sélectivement, isolément ou en combinaison, comme représenté à la figure 3 :

- une opération "OFP20" de fermeture partielle puis d'ouverture de l'embrayage 20 principal,
- une opération "ORC46" de régulation du couple dérivé par l'embrayage multidisques 46,
- une opération "ORC14" de régulation du couple fourni par le moteur 14,

pour que la vitesse "V" de rotation de l'arbre de sortie du moteur 14 atteigne rapidement la vitesse "$V_{SYNC}$" de synchronisation.

Plus particulièrement, l'unité 12 de pilotage est susceptible, pour déclencher l'opération "ORC14" de régulation du couple fourni par le moteur 14, d'émettre une consigne "$C_{MOT}$" de régulation du couple fourni par le moteur 14.

De même, pour déclencher l'opération 'ORC46' de régulation du couple dérivé par l'embrayage multidisques 46, l'unité 12 de pilotage est susceptible d'émettre une consigne "$C_D$" de régulation de couple dérivé par l'embrayage multidisques.

Le détail de l'émission de ces consignes sera décrit ultérieurement dans la présente description.

Avantageusement, comme on le verra dans la suite de la présente description, l'unité 12 de pilotage est aussi susceptible de commander l'enchaînement des sous-étapes "SE1", "SE2", "SE3", "SE4", "SE5", "SE6" et "SE7" suivant un ordre déterminé de manière à parvenir plus rapidement à la vitesse "$V_{SYNC}$" de synchronisation de l'arbre 22 de sortie du moteur thermique 14.

Conformément à l'invention, les paramètres de fonctionnement du groupe motopropulseur 10 précédemment évoqués comportent une information "$t_{SYNC}$" représentative d'une durée estimée pour que la vitesse V de rotation de l'arbre 22 de sortie du moteur

14 atteigne la vitesse "$V_{SYNC}$" de synchronisation. Cette information est établie par un calculateur qui peut par exemple être intégré à l'unité de pilotage 12.

Les paramètres de fonctionnement du groupe motopropulseur comportent aussi une information "$t_R$" représentative d'une durée estimée pour passer du rapport "$R_K$" courant au rapport "$R_{K+1}$" de rang supérieur sans que l'unité de pilotage commande la fermeture partielle puis l'ouverture de l'embrayage 20 principal. Cette information est aussi générée par le calculateur qui peut être intégré à l'unité de pilotage 12.

Les paramètres de fonctionnement du groupe motopropulseur comportent encore une information "$I_K$" représentative du rapport "$R_K$" de transmission courant, et une information "$I_{K+1}$" représentative du rapport "$R_{K+1}$" de transmission de rang supérieur Cette information consiste par exemple en un repérage de la position de l'actionneur 50 du dispositif 39 conventionnel de crabotage des pignons 34, 36 et est transmise de l'actionneur 50 à l'unité de pilotage 12 par l'intermédiaire d'une liaison 51.

Ces paramètres déterminent le déclenchement et/ou l'inhibition de chaque sous-étape "SE1", "SE2", "SE3", "SE4", "SE5", "SE6" et "SE7", l'enchaînement des sous-étapes "SE1", "SE2", "SE3", "SE4", "SE5", "SE6" et "SE7" activées, et le choix des opérations "OFP20", "ORC46" et "ORC14" qui sont commandées par l'unité 12 de pilotage au cours de la quatrième sous-étape "SE4".

L'organigramme de la figure 3 représente, chronologiquement de haut en bas, le déroulement de l'étape "$EP(R_k, R_{k+1})$" de passage d'un rapport "$R_K$" de transmission courant à un autre rapport "$R_{K+1}$" le procédé de commande, et de ses différentes sous-étapes en fonction des différentes configurations déterminées par les valeurs des paramètres de fonctionnement du groupe motopropulseur.

Comme on peut le constater, dès lors que la volonté du changement de rapport a été déterminée au cours de l'étape de test "ET", l'étape "$EP(R_k, R_{k+1})$" débute par une première sous-étape "SET1" de test au cours de laquelle on compare les valeurs "$I_K$" représentative du rapport "$R_K$" de transmission courant, "$I_{K+1}$" représentative du rapport "$R_{K+1}$" de transmission de rang supérieur à une valeur "$I_D$" représentative du rapport "$R_D$" de transmission de l'engrenage 44 du dispositif de dérivation de couple.

A l'issue de cette première sous-étape "SET1" de test, si l'information "$I_{K+1}$" est égale à l'information "$I_D$", c'est à dire si elle est représentative d'un rapport "$R_{K+1}$" de transmission supérieur qui est égal au rapport "$R_D$" déterminé de transmission du dispositif de dérivation de couple, la première sous-étape "SE1" et la deuxième sous-étape "SE2" sont exécutées simultanément, c'est à dire que l'unité 12 de pilotage commande le serrage de l'embrayage 46 multidisques en même temps qu'elle commande l'ouverture de l'embrayage principal 20. Puis l'unité 12 de pilotage commande par exemple d'une manière conventionnelle l'enchaînement des sous-étapes suivantes, c'est à dire qu'elle commande successivement les étapes "SE3", "SE4", "SE6" précédemment décrites.

Le rapport visé est "$R_D$", l'étape SE4 se termine par un serrage complet de l'embrayage multidisques, ce qui correspond à une valeur finale "$F_{46TOT}$" de la consigne émise à l'intention de l'actionneur 52.

A l'issue de la première sous-étape "SET1" de test, si l'information "$I_K$" est représentative d'un rapport "$R_K$" de transmission courant qui est égal au rapport "$R_D$" du dispositif de dérivation de couple, la première sous-étape SE1, la troisième sous-étape "SE3" et la quatrième sous-étapes "SE4" sont inhibées. La cinquième sous étape "SE5" intervient immédiatement après la deuxième sous-étape "SE2" et avant les sixième et septième sous-étapes "SE6" et "SE7" qui sont simultanées. En d'autres termes, dans cette configuration, il n'est pas nécessaire d'effectuer une régulation du couple de l'arbre de sortie 22 du moteur 14 puisque l'embrayage 46 de dérivation, de rapport "$R_D$" correspond au rapport courant "$R_k$" craboté. De ce fait, l'unité 12 de pilotage anticipe le changement de rapport tout d'abord en suivant l'étape "SE2" d'ouverture de l'embrayage principal 20, puis en engageant le rapport "$R_{k+1}$" de rang supérieur en suivant l'étape "SES". Le changement de rapport s'effectue alors par un serrage progressif de l'embrayage principal simultanément à un desserrage de l'embrayage multidisques 46, les deux sous-étapes correspondantes "SE6" et "SE7" étant exécutées simultanément.

A l'issue de la première sous étape "SET1" de test, si l'information "$I_{K+1}$" est inférieure à l'information "$I_D$", c'est à dire si elle est représentative d'un rapport "$R_{K+1}$" de transmission supérieur qui est strictement inférieur au rapport "$R_D$" déterminé de transmission du dispositif de dérivation de couple, l'unité de pilotage passe à une seconde sous-étape "SET2" de test au cours de laquelle elle compare la valeur de l'information "$t_{SYNC}$", représentative de la durée estimée pour que la vitesse "V" de rotation de l'arbre 22 de sortie du moteur 14 atteigne la vitesse "$V_{SYNC}$" de synchronisation à des données internes de l'unité 12 de pilotage. Ces données internes permettent à l'unité 12 de pilotage de classer ladite durée "$t_{SYNC}$" soit dans un groupe de valeurs moyennes ou réduites, soit dans un groupe de valeurs élevées. Le détail du processus de classement ne sera pas décrit plus explicitement dans la présente description.

De ce fait, si l'information "$t_{SYNC}$" correspond à une durée "$t_{SYNC}$" moyenne ou réduite, l'unité de pilotage enchaîne les sous-étapes "SE1", "SE2", "SE3", "SE4", "SE5", "SE6" et "SE7" les unes après les autres selon leur ordre numéral croissant.

L'opération "OFP20" de fermeture partielle puis d'ouverture de l'embrayage principal n'est toutefois commandée que si l'information "$t_R$" représentative d'une durée estimée pour passer du rapport "$R_K$" courant au rapport "$R_{K+1}$" de rang supérieur sans que l'unité de pilotage ne commande la fermeture partielle puis l'ouverture 20 de l'embrayage principal est élevée, c'est à dire supérieure à la durée "$t_{SYNC}$" représentative de la durée estimée pour que la vitesse V de rotation de l'arbre 22 de sortie de moteur 14 atteigne la vitesse "$V_{SYNC}$" de synchronisation.

En revanche, si l'information "$t_{SYNC}$" correspond à une durée "$t_{SYNC}$" élevée, l'unité 12 de pilotage commande que, après la première sous-étape "SE1" et la deuxième sous-étape "SE2", la cinquième sous-étape "SE5" immédiatement suivie de la sixième sous-étape "SE6" et de la septième sous-étape "SE7", interviennent pendant la quatrième sous-étape "SE4". En d'autres termes, l'unité 12 de pilotage suit conventionnellement les première, deuxième et troisième sous-étapes "SE1", "SE2" et "SE3" précédemment décrites, puis elle commande, au cours de la sous-étape "SES", le crabotage du rapport de rang "$R_{K+1}$" avant que la vitesse "V" de l'arbre de sortie 22 du moteur thermique 14 ne soit parvenue à la vitesse "$V_{sync}$" de synchronisation à la fin de la quatrième sous-étape "SE4". L'unité 12 commande aussi le basculement du couple entre l'embrayage 46 de dérivation et l'embrayage 20 principal avant la fin de la quatrième sous-étape "SE4".

Avantageusement, l'unité 12 de pilotage est alors susceptible d'émettre une consigne "$C_{EMB}$" de régulation de couple transmis par l'embrayage 20 principal à l'issue de la septième sous-étape pour achever la quatrième sous-étape.

Dans les deux cas précités pour lesquels l'information "$I_{K+1}$" est inférieure à l'information "$I_D$", une des caractéristiques principales de l'invention est que l'unité de pilotage commande au moins, au cours de la quatrième sous-étape "SE4", le déclenchement de l'opération "OFP20" de fermeture partielle puis d'ouverture avec glissement de l'embrayage principal 20, pour que la vitesse de l'arbre primaire 24 atteigne plus rapidement la vitesse "$V_{SYNC}$" de synchronisation.

Dans le mode de réalisation préféré de l'invention, au cours de la quatrième sous-étape "SE4", l'unité 12 de pilotage commande aussi l'opération "ORC14" de régulation du couple fourni par le moteur 14.

Plus particulièrement, au cours de la quatrième sous-étape "SE4", l'unité 12 de pilotage commande la synchronisation de l'arbre 22 de sortie du moteur 14 en émettant une consigne "$C_R$" de régulation du couple comportant la consigne "$C_D$" de régulation du couple dérivé par l'embrayage multidisques 46, laquelle consigne "$C_D$" correspond à l'opération "ORC46", et en émettant la consigne "$C_{MOT}$" du couple fourni par le moteur 14, laquelle consigne "$C_{MOT}$" correspond à l'opération "ORC14. L'unité 12 de pilotage commande l'opération "OFP20" correspondant à la fermeture partielle avec glissement de l'embrayage principal 20 puis son ouverture pendant l'émission de la consigne "$C_R$" de régulation du couple. L'exécution de cette opération "OFP20" par l'unité 12 de pilotage au cours de la sous-étape "SE4" permet donc, en commandant le léchage de l'embrayage principal 20, d'accélérer la synchronisation de l'arbre primaire 24, et ainsi de soulager les synchroniseurs.

Avantageusement, la consigne "$C_R$" de régulation du couple dépend de variables pondérées, le choix des variables et la valeur des pondérations associées dépendant notamment des conditions du passage du rapport, du style de conduite du conducteur du véhicule, et de l'utilisation du véhicule.

Ainsi, selon un premier mode de réalisation de l'invention, la consigne "$C_R$" de régulation du couple est associée à l'obtention d'un minimum d'une fonction "f" de trois variables pondérées par trois coefficients "$c_1$", "$c_2$", "$c_3$" qui dépendent notamment des conditions du passage du rapport, du style de conduite du conducteur du véhicule, et de l'utilisation du véhicule:

$$f = \{(c_1, \Delta V),(c_2, E_D),(c_3,\Delta C)\}$$

pour laquelle :

- "$\Delta V$" est une variable représentative de la vitesse de convergence de la vitesse "V" de l'arbre 22 de sortie du moteur 14 vers la vitesse "$V_S$" de synchronisation,
- "$E_D$" est une variable représentative de l'énergie dissipée dans le dispositif de dérivation, c'est à dire dans l'embrayage multidisques 46,
- "$\Delta C$" est une variable représentative du profil du couple transmis aux roues du véhicule par l'intermédiaire du pont 28.

Il convient de noter que les trois coefficients "$c_1$", "$c_2$", "$c_3$" ne sont pas figés mais peuvent notamment évoluer en fonction des conditions de roulage du véhicule afin de privilégier la rapidité du changement de rapport ou la durabilité de l'embrayage 46 multidisques.

Le détail de la corrélation entre la consigne "$C_R$" de régulation du couple et le minimum de la fonction "f" de trois variables pouvant être défini de multiples façons, il ne sera pas décrit plus explicitement dans la présente description.

Selon un second mode de réalisation de l'invention, la consigne "$C_R$" est une consigne d'asservissement qui dépend de la vitesse "V" de l'arbre de sortie 22 du moteur 14 et qui correspond à un couple formé de la consigne "$C_D$" de régulation de l'intensité du serrage de l'embrayage multidisques 46, pondéré d'un coefficient "$c_4$" associé et de la consigne "$C_{MOT}$" du couple fourni par le moteur 14, pondéré d'un coefficient "$c_5$" associé.

Plus particulièrement la valeur du couple de coefficients "$c_4$", "$c_5$" est associé à l'obtention d'un optimum d'une fonction "g" de trois variables :

$$g = (\Delta V, E_D, \Delta C)$$

pour laquelle :

- "$\Delta V$" est une variable représentative de la vitesse de convergence de la vitesse "V" de l'arbre de sortie 22 du moteur 14 vers la vitesse "$V_S$" de synchronisation,
- "ED" est une variable représentative de l'énergie dissipée dans le dispositif de dérivation, c'est à dire notamment dans l'embrayage multidisques 46,
- "$\Delta C$" est une variable représentative du profil du couple transmis aux roues du véhicule par l'intermédiaire du pont 28.

L'obtention de la variable "$\Delta C$" à partir du profil du couple ne sera pas décrite plus explicitement dans la présente description.

Le détail de la corrélation entre la valeur du couple de coefficients "$c_4$", "$c_5$" et l'optimum d'une fonction "g" pouvant être défini de multiples façons, il ne sera pas décrit plus explicitement dans la présente description.

L'invention permet donc d'effectuer rapidement des passages montants sans rupture du couple moteur.

## Revendications

1. Procédé de commande d'un groupe motopropulseur comprenant un moteur thermique (14) associé à une transmission automatisée (16) à synchroniseurs et à dérivation de couple comportant un premier arbre primaire (24) qui est accouplé à un arbre de sortie du moteur (22) par l'intermédiaire d'un embrayage (20) principal et à un arbre secondaire (26) par des descentes d'engrenages, et un second arbre primaire (42) qui est accouplé d'une part directement à l'arbre (22) du moteur (14) et à l'arbre secondaire (26) par l'intermédiaire d'un embrayage (46) de dérivation, de façon à dériver le couple vers celui-ci sur un rapport particulier ($R_D$) de la transmission et pendant certains changements de rapports, **caractérisé en ce que** le couple fourni par le moteur peut être régulé entre le décrabotage du rapport courant ($R_K$) et le crabotage du rapport ($R_{K+1}$) de rang supérieur, de façon à ce que la vitesse de rotation de l'arbre de sortie du moteur (22) atteigne rapidement la vitesse de synchronisation ($V_{SYNC}$) moteur sur le rapport de transmission ($R_{K+1}$) de rang supérieur.

2. Procédé de commande selon la revendication 1, **caractérisé en ce qu'**il comporte une opération (OFP20) de fermeture partielle puis d'ouverture de l'embrayage (20) principal, entre le décrabotage du rapport courant ($R_K$) et le crabotage du rapport ($R_{K+1}$) de rang supérieur.

3. Procédé de commande selon la revendication 1 ou 2, **caractérisé en ce qu'**il comporte une opération (ORC46) de régulation du couple dérivé ($C_D$) par l'embrayage (46) de dérivation entre le décrabotage du rapport courant ($R_K$) et le crabotage du rapport ($R_{K+1}$) de rang supérieur.

4. Procédé de commande selon la revendication 1, 2 ou 3, **caractérisé en ce que** les paramètres de fonctionnement du groupe motopropulseur comportent notamment :

   - une information ($t_{SYNC}$) représentative d'une durée estimée pour que la vitesse (V) de rotation de l'arbre (22) de sortie du moteur (14) atteigne la vitesse ($V_{SYNC}$) de synchronisation,
   - une information ($t_R$) représentative d'une durée estimée pour passer du rapport ($R_K$) courant au rapport ($R_{K+1}$) de rang supérieur sans que l'unité (12) de pilotage commande la fermeture partielle puis l'ouverture de l'embrayage principal (20),
   - une information ($I_K$) représentative du rapport ($R_K$) de transmission courant, et
   - une information ($I_{K+1}$) représentative du rapport ($R_{K+1}$) de transmission de rang supérieur.

5. Procédé de commande selon l'une des revendications précédentes, **caractérisé en ce que** l'unité de pilotage (12) du groupe motopropulseur émet une consigne ($C_{MOT}$) de régulation de couple fourni par le moteur (14) et/ou une consigne ($C_D$) de régulation de couple transmis par l'embrayage (46) de dérivation.

6. Procédé de commande selon l'une des revendications 2 à 5, **caractérisé en ce que** l'opération (OFP20) de fermeture partielle puis d'ouverture de l'embrayage (20) principal est engagée si le rapport ($R_{K+1}$) de rang supérieur est inférieur à un rapport particulier ($R_D$) de dérivation de couple, et si la durée estimée de passage (tr) est supérieure à une durée estimée de synchronisation ($t_{SYNC}$) du moteur.

7. Procédé de commande selon l'une des revendications précédentes, **caractérisé en ce que** l'unité de pilotage (12) émet une consigne ($C_R$) de régulation de couple comportant une consigne de pilotage du couple moteur ($C_{MOT}$) et une consigne de pilotage du couple ($C_D$) transmis par l'embrayage (46) de dérivation qui sont issues chacune d'une fonction de plusieurs variables.

8. Procédé de commande selon la revendication 7, **caractérisé en ce que** la consigne ($C_R$) de régulation de couple émise par l'unité de pilotage (12) dépend de variables pondérées, le choix des variables et le choix des pondérations associées dépendant notamment des conditions du passage du rapport, du style de conduite et de l'utilisation du véhicule.

9. Procédé de commande selon l'une des revendications précédentes, **caractérisé en ce que** si le rapport ($R_{K+1}$) de rang supérieur à engager est inférieur au rapport particulier de dérivation de couple ($R_D$), et si la durée estimée de passage (tr) est inférieure à la durée (tsync) estimée de synchronisation du moteur, l'unité (12) commande que le rapport ($R_{K+1}$) est engagé pendant la phase de synchronisation du moteur, le début de la fermeture de l'embrayage (20) étant simultané à la fin de cette phase de synchronisation du moteur.

10. Procédé de commande selon l'une des revendications précédentes, **caractérisé en ce que** si le rapport ($R_{K+1}$) de rang supérieur à engager correspond au rapport particulier de dérivation de couple ($R_D$), l'unité (12) commande que la fermeture de l'embrayage de dérivation soit simultanée à l'ouverture de l'embrayage (20) principal.

11. Procédé de commande selon l'une des revendications précédentes, **caractérisé en ce que** l'unité 12 commande que le rapport ($R_{K+1}$) de rang supérieur soit engagé avant d'ouvrir l'embrayage (46), l'ouverture de l'embrayage (46) étant simultané à la fermeture de l'embrayage (20) principal.

**Fig. 1a**

EP 1 279 549 A1

**Fig. 1b**

10

ET

$C_{R_K} \rightarrow R_{K+1}$ ? —— oui —— Début EP($R_K, R_{K+1}$)

non

$F_{46} \rightarrow 52$ —— SE1

$O_{20} \rightarrow 48$ —— SE2

$D_{34} \rightarrow 50$ —— SE3

SE4

$C_{36} \rightarrow 50$ —— SE5

EP($R_K, R_{K+1}$)

$F_{20} \rightarrow 48$ —— SE6

$O_{46} \rightarrow 52$ —— SE7

FIN EP($R_K, R_{K+1}$)

Fig. 2

**Fig. 3**

**Office européen
des brevets**

## RAPPORT DE RECHERCHE EUROPEENNE

Numéro de la demande

EP 02 29 1852

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 198 53 824 A (GETRAG GETRIEBE ZAHNRAD) 31 mai 2000 (2000-05-31) * revendication 1 * | 1,2 | B60K41/22 F16H3/12 F16H61/04 B60K41/10 |
| X<br>A | FR 2 794 512 A (RENAULT) 8 décembre 2000 (2000-12-08) * revendication 1; figures * | 1,5,7<br>2 | |
| X | US 5 313 856 A (KLARHOEFER CHRISTIAN ET AL) 24 mai 1994 (1994-05-24) * revendications 10-13 * | 1,5,7 | |
| A | PATENT ABSTRACTS OF JAPAN vol. 007, no. 189 (M-237), 18 août 1983 (1983-08-18) & JP 58 091950 A (SANWA SEIKI KK), 1 juin 1983 (1983-06-01) * abrégé * | 1-10 | |
| D,A | EP 0 088 486 A (AUTOMOTIVE PROD PLC) 14 septembre 1983 (1983-09-14) * figures * | 1 | |

**DOMAINES TECHNIQUES RECHERCHES (Int.Cl.7)**

B60K
F16H

Le présent rapport a été établi pour toutes les revendications

| Lieu de la recherche | Date d'achèvement de la recherche | Examinateur |
|---|---|---|
| LA HAYE | 27 novembre 2002 | Bufacchi, B |

**ANNEXE AU RAPPORT DE RECHERCHE EUROPEENNE
RELATIF A LA DEMANDE DE BREVET EUROPEEN NO.**

EP 02 29 1852

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

27–11–2002

| Document brevet cité au rapport de recherche | | | Date de publication | Membre(s) de la famille de brevet(s) | | Date de publication |
|---|---|---|---|---|---|---|
| DE | 19853824 | A | 31–05–2000 | DE | 19853824 A1 | 31–05–2000 |
| FR | 2794512 | A | 08–12–2000 | FR | 2794512 A1 | 08–12–2000 |
| | | | | EP | 1114260 A1 | 11–07–2001 |
| | | | | WO | 0075532 A1 | 14–12–2000 |
| US | 5313856 | A | 24–05–1994 | DE | 59006381 D1 | 11–08–1994 |
| | | | | WO | 9113271 A1 | 05–09–1991 |
| | | | | EP | 0517705 A1 | 16–12–1992 |
| | | | | ES | 2057856 T3 | 16–10–1994 |
| | | | | JP | 2898405 B2 | 02–06–1999 |
| | | | | JP | 5504391 T | 08–07–1993 |
| JP | 58091950 | A | 01–06–1983 | AUCUN | | |
| EP | 0088486 | A | 14–09–1983 | EP | 0088486 A2 | 14–09–1983 |
| | | | | JP | 58193951 A | 11–11–1983 |
| | | | | US | 4544057 A | 01–10–1985 |

EPO FORM P0460

Pour tout renseignement concernant cette annexe : voir Journal Officiel de l'Office européen des brevets, No.12/82